# EUROPÄISCHE PATENTSCHRIFT

(11) **EP 2 047 742 B1**
(45) Veröffentlichungstag und Bekanntmachung des Hinweises auf die Patenterteilung: **23.02.2011**
(21) Anmeldenummer: 08166112.6
(22) Anmeldetag: 08.10.2008
(51) Int. Cl.: A01K 5/01

(54) **Futternapf**
Feeding dish
Ecuelle d'alimentation

(30) Priorität: 11.10.2007 DE 102007048896
(43) Veröffentlichungstag der Anmeldung: 15.04.2009
(73) Patentinhaber: VerDe Tec GmbH Neue Verpackungstechnologien, 90429 Nürnberg (DE)
(72) Erfinder: Reissig, Dipl.-Ing. Thomas, 90429 Nürnberg (DE)
(74) Vertreter: Zech, Stefan Markus

(56) Entgegenhaltungen:
- DE-U1- 29 912 007
- NL-A- 8 501 230
- US-A- 3 527 192
- US-A- 5 709 168
- US-A1- 2006 278 168

## Beschreibung

Die vorliegende Erfindung betrifft einen Futternapf, insbesondere für Tiere, mit einer dünnwandigen Portionsschale und einem diese tragenden, wieder verwendbaren Tragrahmen, in den die Portionsschale über einen Oberrand insbesondere lösbar einhängbar ist.

Tiernahrung und insbesondere nasse Tiernahrung, so genanntes Weichfutter, wird derzeit überwiegend in Weißblechdosen und Aluminium-Tiefziehschalen mit Platinen verpackt. Daneben hat sich auch der Standbodenbeutel und Flachbeutel als weitere Verpackungsform etabliert.

Allen diesen Verpackungen liegt dabei die manuelle Entnahme des Futters aus der Verpackung und Darreichung in einem Fressteller oder -napf zugrunde, da die Tiere entweder aufgrund der Packungsgeometrie oder sonstiger Einschränkungen nicht direkt aus der Verpackung fressen können oder es gerne tun. Darüber hinaus sind insbesondere Weißblechdosen und Aluminium-Tiefziehschalen materialintensivere Verpackungsformen, was zu hohen Beschaffungs- und Entsorgungskosten führt.

Eine diesbezügliche Verbesserung bietet ein Futternapf gemäß der DE 82 26 567 U1, der eine dünnwandige Portionsschale und einen diese tragenden, wieder verwendbaren Tragrahmen, umfasst, in den die Portionsschale insbesondere lösbar einsetzbar ist. Die Portionsschale besteht hier aus einem dünnwandigen Kunststoff, einem beschichteten Papier, Aluminium oder dergleichen Werkstoff. Sie wird dabei so gefertigt, dass sie eine Eigenformstabilität und insbesondere eine sich verjüngende Querschnittsform aufweist.

Nachteil dieser Ausführungsform ist, dass aufgrund der Ausführung der Portionsschale aus einem dünnwandigen Kunststoff, einem beschichteten Papier, Aluminium oder dergleichen Werkstoff dennoch sehr hohe Produktionskosten und aufgrund ihres materialintensiven Aufbaus hohe Beschaffungs- und Entsorgungskosten entstehen.

Vorliegender Erfindung liegt folglich die Aufgabe zugrunde ein Verpackungskonzept und insbesondere einen Futternapf bzw. einen damit verwendbaren Portionskörper zu schaffen, bei dem die Material- und Herstellungskosten reduziert sind und der eine verbesserte Anwenderfreundlichkeit aufweist.

Diese Aufgabe wird durch einen Futternapf, insbesondere für Tiere, gemäß Anspruch 1 mit einer dünnwandigen Portionsschale und einem diese tragenden, wieder verwendbaren Tragrahmen, in den die Portionsschale insbesondere über einen Oberrand lösbar einhängbar ist, gelöst, bei dem die Portionsschale aus einer dreidimensional verformten Kunststofffolie, insbesondere aus Polyethylenterephtalat (PET), Polyethylen (PE), orientiertem Polypropylen (OPP), Polyamid (PA) und/oder Cast Polypropylen (CPP), und Verbänden aus den vorgenannten sowie weiteren Barriereschicht-Materialien gebildet ist oder zumindest die genannten Materialien umfasst.

Kern der Erfindung ist also die zweiteilige Ausführung des Futternapfes mit einem starren, wieder verwendbarem Tragrahmen und einer in diesen einhängbaren Portionsschale, die, im Gegensatz zum Stand der Technik, aus einem äußerst dünnen, dreidimensional verformten Folienmaterial gemäß der obigen Zusammensetzung hergestellt ist. Der starre Tragrahmen dient hierbei als wieder verwendbares Aufnahme- und Haltemittel für die aus Folie gebildete Portionsschale.

Vorwiegend wird die Portionsschale als eine als Portionskörper ausgeführte Portionsschale hergestellt, die zur Aufnahme von insbesondere Tiernahrung, einen insbesondere hermetisch abgeschlossenen Innenraum aufweist, der eine vorkonfektionierte Menge an Nahrung enthält. Ein solcher Portionskörper kann dann sehr einfach zum Verzehr in den Tragrahmen eingehängt werden. Auf die entsprechenden Ausführungsformen wird im Folgenden noch detaillierter eingegangen. In diesem Zusammenhang sei erwähnt, dass die erfindungsgemäßen Ausführungsformen primär für Tierfutter vorgesehen sind. Eine Anwendung für menschliche Nahrungsversorgung ist jedoch natürlich auch denkbar.

Die Definition einhängbar bedeutet erfindungsgemäß, dass die Portionsschale insbesondere so in den Tragrahmen einhängbar ist, dass sie an deren Oberrand gehalten ist und mit ihrem Schalenbereich frei im Rahmen hängt. Ihre Form wird folglich durch die, durch die dreidimensionale Vorverformung gebildete Portionsschalenform definiert. Es ist von Vorteil der Portionsschale in ihrer Außengeometrie wenigstens teilweise der Form eines Kugelabschnittes oder Kugelsegments aufzuprägen, wobei sich ein Kugelabschnitt oder Kugelsegment mit möglichst flachen Seitenwandbereichen gerade für die Benutzung durch Katzen, die offensichtlich flache Gefäße bevorzugen, als besonders vorteilhaft herausgestellt hat.

Als noch ausreichend flach wird angesehen, wenn die Randabschnitte des Kugelabschnitts bzw. Kugelsegments in einem Winkel von 30° bis 60°, bevorzugterweise etwa 40° bis 50°, zu einer Aufstell- oder Bodenfläche geneigt sind. Eine solche Neigung empfindet eine Katze oder auch ein anderes Tier bei der Entnahme von Futter aus der Portionsschale nicht als unangenehm.

Die Aufprägung der Form eines Kugelabschnittes oder Kugelsegments kann insbesondere durch Verformen der Kunststofffolie erfolgen. Es erscheint auch überraschend, dass sich die Kunststofffolie zu einem derartigen Kugelabschnitt oder Kugelsegment mit noch immer ausreichender Tiefe zur Aufnahme von Tierfutter, ohne Beeinträchtigung der Funktionseigenschaften der Folie umformen lässt. In der Fachwelt bestanden stets Bedenken, eine Kunststofffolie, insbesondere wenn es sich um eine Verbundfolie mit mehrschichtigem Aufbau umfassend eine Barriereschicht, handelt, umzuformen. Praktische Versuche haben allerdings ergeben, dass dieser Umformprozess ohne Beeinträchtigung der Funktionseigenschaften der Folie reproduzierbar durchgeführt werden kann.

Die Portionsschale mit der zu einem Kugelabschnitt oder Kugelsegment geformten Kunststofffolie weist darüber hinaus eine gewisse eigene Formstabilität auf, die allerdings bei einer nach innen, das heißt in Richtung des Inneren des Kugelabschnitts oder Kugelsegments gerichteten Krafteinwirkung zu einer - meist reversiblen - Verformung der Portionsschale führt. Durch das in der Portionsschale befindliche Tierfutter sowie durch die Schwerkraft in Benutzungsposition, das heißt bei Einhängen der Portionsschale in den Tragrahmen, bilden sich solche Verformungen meist zurück und die Portionsschale nimmt wieder ihre ursprüngliche im Wesentlichen kugelabschnittsförmige bzw. kugelsegmentförmige Gestalt an. Allerdings kann die Portionsschale nach Entleerung zur Reduzierung des Abfallvolumens ohne weiteres zusammengedrückt werden.

In Bezug auf seine Herstellung hat dieses Verfahren und der erfindungsgemäße Futternapf den Vorteil, dass zum einen der kostenintensivere starre Tragrahmen getrennt von den sehr preiswerten Portionsschalen hergestellt werden kann. Da darüber hinaus zur Versorgung der Endverbraucher lediglich eine große Anzahl an Portionsschalen und eine geringere Anzahl an Tragrahmen nötig ist, wird der Gesamtmaterialaufwand deutlich reduziert. Ein wesentlicher Punkt ist jedoch, dass die Portionsschalen aus einem dünnwandigen insbesondere weichen bzw. flexiblen, vorzugsweise aber auch sterilisierbaren Folienmaterial hergestellt sind, wodurch die Produktionskosten sowie der Entsorgungsaufwand deutlich reduziert sind.

Der Tragrahmen ist vorzugsweise als ein Rahmen mit offenem Boden auszubilden, in den dann die Portionsschale über entsprechende Halte- und Verbindungsmittel eingehängt werden kann. Der Grundtragrahmen kann hier einen voll umlaufenden Randbereich zum Auflagern des Oberrandes der Portionsschale aufweisen oder aber aus einzelnen Tragelementen bestehen, die miteinander zu einer mehr oder weniger starren Struktur verbunden sind und der Aufnahme der Portionsschale dienen. Hier sind sämtliche produzierbare Formen und insbesondere Kunststoffformen denkbar.

In diesem Zusammenhang sei erwähnt, dass der Tragrahmen aus jedem denkbaren Material hergestellt sein kann. Bevorzugt ist jedoch ein Kunststoffmaterial, da dies sowohl die die Anwendbarkeit verbessert und günstig hergestellt werden kann.

Vorzugsweise ist die Folie eine Verbundfolie mit einem mehrschichtigen Aufbau, insbesondere umfassend eine Barriereschicht, insbesondere aus Aluminium (AL), Aluminiumoxyd (AlOx) Siliziumoxyd (SiOx) und/oder Ethylvinylalkohol (EVOH). Diese Barriereschicht ermöglicht insbesondere die geschützte Lagerung der im Inneren enthaltenen Nahrungsmittel.

Als besonders vorteilhaft hat sich hier eine Verbundfolie mit wenigstens drei Schichten bzw. einer Dreischichtanordnung herausgestellt und insbesondere einer OPP-Schicht/Barriereschicht/PE-Schicht-Anordnung, OPP-Schicht/Barriereschicht/CPP-Schicht- Anordnung oder PET-Schicht/Barriereschicht/CPP-Schicht-Anordnung.

Vorzugsweise umfasst die Dicke der Folie zwischen 70µm und 150µm. Dies hat insbesondere hinsichtlich der Widerstandsfähigkeit des Portionskörpers besondere Vorteile.

Vorzugsweise weist die Portionsschale insbesondere am Oberrand einen stabilisierenden, im Wesentlichen formstabilen Halterahmen auf, über den sie am Tragrahmen insbesondere lösbar einhängbar ist. Dieser Halterahmen ist vorzugsweise fest mit der Portionsschale verbunden und ermöglicht das Einhängen der Portionsschale am oder im Tragrahmen und den dichten Verschluss mit einem Deckelelement, insbesondere das Anschweißen eines Deckelelements. Darüber hinaus stabilisiert er die Portionsschale und garantiert so, beispielsweise beim Transport des Selben, zumindest teilweise eine Formstabilität. Zudem kann ein solcher Halterahmen auch als Positionierungsmittel beim Verkauf oder als Befestigungsmittel in einer Verpackung dienen. Neben der Ausführung als fest mit der Folie verbundenen Halterahmen ist es natürlich auch möglich den Halterahmen lösbar mit der Folie auszubilden.

Vorzugsweise ist am Halterahmen oder am Tragrahmen wenigstens ein Verbindungselement zum insbesondere lösbaren Befestigen der Portionsschale am Tragrahmen vorgesehen. Dieses Verbindungselement ist vorzugsweise eine Rastnase am Tragrahmen und eine komplementäre Rastnute an der Portionsschale oder umgekehrt. Natürlich sind hier auch sämtliche andere aus dem Stand der Technik bekannte Verbindungselemente, insbesondere Rastverbindungen, Klettverbindungen, Spreizklemmen und ähnliche Verbindungselemente anwendbar. Primär relevant ist, dass die Positionierung der Portionsschale sehr einfach am Tragrahmen erfolgen kann. Um eine geleerte Portionsschale zu entfernen sollte diese Verbindung vorzugsweise lösbar sein.

Vorzugsweise weist die Portionsschale ein öffenbares und/oder ggf. wieder verschließbares Deckelelement auf, so dass sich zwischen diesem und der Portionsschale ein insbesondere hermetisch verschlossener oder verschließbarer Innenraum zur Aufnahme von Nahrung bildet. Das Deckelelement kann in einer ersten Ausführungsform einen planen Deckel umfassen. In einer zweiten, alternativen Ausführungsform kann das Deckelelement aber auch eine nach oben gewölbte Deckelhaube umfassen, wobei weiter vorzugsweise die Deckelhaube in Gestalt einer verformten Folie, insbesondere aus einer dreidimensional verformten Kunststofffolie, beispielsweise aus Polyethylenterephtalat (PET), Polyethylen (PE), orientiertem Polypropylen (OPP), Polyamid (PA) und/oder Cast Polypropylen (CPP) gebildet ist oder diese Materialien umfasst. Weiter vorzugsweise, aber keineswegs notwendig, ist bei Ausbildung des Deckelelementes als Deckelhaube die dreidimensional verformte Kunststofffolie für die Portionsschale aus demselben Material gebildet, wie die dreidimensional verformte Kunststofffolie für die Deckelhaube. Dieses Deckelelement ist bevorzugt am Halterahmen der Portionsschale angeordnet. In einer ersten bevorzugten Ausgestaltung ist das Deckelelement am Halterahmen über eine Peelnaht lösbar befestigt. Diese Ausführungsform wird bevorzugt, da sich der Deckel hier komplett vom Halteelement ablösen lässt und so keine störenden Restelemente, die ein Tier bei Entnahme des Futters behindern könnten, verbleiben.

Auf der anderen Seite ist das Ausbilden einer Peelnaht, die zudem ausreichend barrieresicher sein muss, nicht gänzlich unproblematisch, so dass in einer alternativen Ausführungsform das Deckelelement am Halteelement durch eine feste Schweiß- oder Siegelverbindung befestigt ist. Das Deckelelement umfassend Deckelring und Deckel weist eine Sollbruchstelle, die beispielsweise als Laserperforation (selektive Folienschwächung entlang einer verlaufenden Linie) ausgebildet sein kann, auf, so dass bei Abziehen des Deckels über eine entsprechende Deckellasche sich der Deckel vom Deckelring trennen lässt und am Halteelement lediglich der dort fest aufgesiegelte Deckelring verbleibt.

Die obigen Ausführungsformen erlauben das Öffnen und je nach Ausführungsform auch das Schließen der Portionsschale, wenn dies nötig sein sollte. Auch hier sind sämtliche aus dem Stand der Technik bekannte Verfahren und Ausführungsformen eines verschließbaren Körpers und insbesondere eines Körpers zur Lagerung von Lebensmitteln anwendbar. Zudem ist es denkbar das Deckelelement als ein (wieder)-verschließbares Deckelelement auszubilden, indem beispielsweise zwischen Halterahmen und Deckel bzw. Deckelelement entsprechende Schließmittel angeordnet sind. Vorzugsweise wird das Deckelelement über ein Schweiß- bzw. Siegelverfahren am Halterahmen bzw. an der Portionsschale angeordnet, so dass der zwischen Deckelelement und Portionsschale gebildete Innenraum hermetisch abgeschlossen ist. Generell ist es in diesem Zusammenhang natürlich möglich, den Innenraum des Portionskörpers mit einer entsprechenden Schutzatmosphäre etc. zu versehen, um Nahrungsmittel länger haltbar zu machen.

Eingangs genannte Aufgabe wird zudem durch einen Portionskörper gemäß Anspruch 16 gelöst, umfassend eine Portionsschale zur Aufnahme von insbesondere Tiernahrung, mit einem insbesondere hermetisch abgeschlossenem Innenraum, der eine vorkonfektionierte Menge an Nahrung enthält, zur Verwendung mit einem Futternapf gemäß einem der vorhergehenden Ansprüche. Hier wird auf alle zuvor genannten Ausführungen und diesbezügliche Vorteile Bezug genommen.

Weitere Ausführungsformen der Erfindung ergeben sich aus den Unteransprüchen.

Im Folgenden wird die Erfindung anhand eines Ausführungsbeispieles näher beschrieben, das durch die beiliegenden Zeichnungen erläutert wird. Hierbei zeigen:
- Fig. 1: eine isometrische Explosionszeichnung einer Ausführungsform der Erfindung;
- Fig. 2: eine Draufsicht der Ausführungsform aus Fig. 1;
- Fig. 3a: ein Querschnitt auf die Ausführungsform aus Fig. 1;
- Fig. 3b: eine von der Ausführungsform nach Fig. 1 abweichende Ausgestaltung in Querschnittsansicht;
- Fig. 4: eine schematisierte Detaildarstellung eines in Fig. 3 gekennzeichneten Randbereichs;
- Fig. 5: eine Draufsicht auf eine Portionsschale gemäß einer modifizierten Ausführungsform;
- Fig. 6: eine Detaildarstellung eines Halterahmens der Portionsschale aus Fig. 5; und
- Fig. 7 und 8: die schematische Darstellung des Arretierungsvorganges zwischen Portionsschale und Tragrahmen einer weiteren Ausführungsform.
- Fig. 9 bis 11: mehrere Varianten einer modifizierten Ausführungsform, bei der auch das Deckelelement eine dreidimensional verformte Kunststofffolie umfasst, oder aus einer solchen besteht.

Im Folgenden werden für gleiche und gleich wirkende Bauteile dieselben Bezugsziffern verwendet, wobei bisweilen zur einfacheren Unterscheidung Hochindizes ihre Verwendung finden.

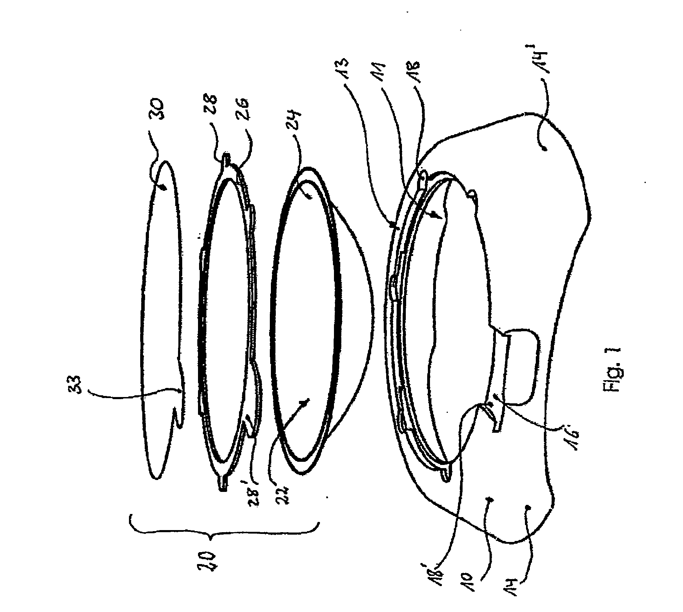

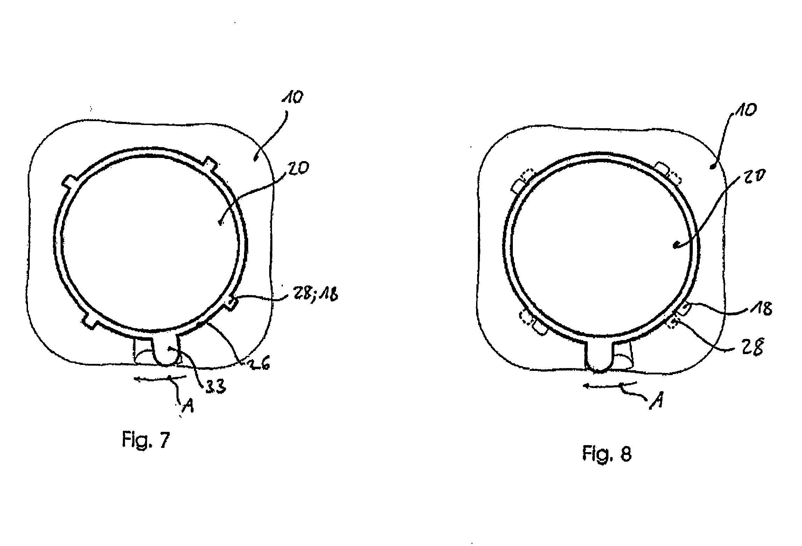

Fig. 1 zeigt eine isometrische Explosionsdarstellung einer ersten Ausführungsform der Erfindung. Dargestellt ist ein Tragrahmen 10 in den eine Portionsschale 24 eingehängt werden kann. Der Tragrahmen 10 ist hier als ein starrer Kunststofftragrahmen 10 dargestellt und weist drei Standbeine 14 auf, die zu einem Grundtragrahmen verbunden sind. Der Grundtragrahmen bildet einen bodenfreien Bereich 11, in den der Portionskörper 20 mit seinem Oberrand frei eingehängt werden kann. Zu diesem Zweck weist der Tragrahmen 10 an seinem Oberrand 13 Verbindungselemente 18 bzw. Rastnuten 18 auf, die komplementär zu Rastnasen 28 am Oberrand der Portionsschale 24 ausgebildet sind. Über diese Verbindungselemente 18, 28 kann die Portionsschale 24 hier auf den Oberrand 13 des Tragrahmens 10 aufgelegt und durch eine seitliche Drehung (siehe insbesondere Fig. 7 und 8) arretiert werden.

Der Portionsschale 24 ist mittels speziellen Verformungsverfahren zu einer kugelabschnittsförmigen, flexiblen und im Wesentlichen nicht formstabilen "Nahrungsschale" verformt. Die dazu verwendete Folie ist eine flexible Kunststofffolie, insbesondere aus PET, PE, OPP, CPP oder PA sowie solche Materialien sowie ggf. Weitere Barriereschichten umfassende Verbände sowie Verbände daraus.

Mit der Portionsschale 24 verbunden ist ein Halterahmen 26, an dem die zuvor erwähnten Rastnasen 28 ausgebildet sind. Der Halterahmen 26 ist hier aus dem selben Material hergestellt wie der Tragrahmen 10. Natürlich sind aber auch andere Materialien und auch andere Halterahmen-Formen verwendbar. Die Funktion des Halterahmens ist neben der Arretierung der Portionsschale 24 im Tragrahmen 10 auch die zusätzliche Formstabilisierung der ansonsten maximal nur geringfügig formstabilen Portionsschale 24, sowohl im eingehängten als auch im nicht eingehängten Zustand.

Die Dimensionierungen der Höhe des Tragrahmens 10 sowie der Portionsschale 24 können so getroffen sein, dass die Portionsschale 24 mit ihrem bodenseitigen Scheitelbereich gerade auf einer Bodenfläche zur Auflage kommt. Dies kann die Gesamtanordnung aus Portionsschale 24 und Tragrahmen 10 insbesondere bei Entnahme von Nahrung durch ein Tier weiter stabilisieren.

Um einen Innenraum 22 zu bilden, der der Aufnahme von Nahrung dient, ist auf dem Halterahmen 26 ein Deckelelement 30 angeordnet. Dieses Deckelelement 30 ist bei diesem Ausführungsbeispiel mittels an sich bekanntem Siegelverfahren auf dem Halterahmen 26 fixiert. Die Portionsschale 24, der Halterahmen 26 und das Deckelelement 30 bilden folglich einen Portionskörper 20, der als Einwegportionskörper 20 der Nahrungsversorgung mit vorkonfektionierten Nahrungsportionen dienen kann.

Um insbesondere eine Fixierung der Portionsschale 24 im Tragrahmen 10 beim Öffnen des Deckelelements 30 zu garantieren, ist vorteilhafterweise Öffnungslasche 33 im Wesentlichen deckungsgleich mit der Rastnase 28' und der komplementären Rastnute 18' ausgebildet. Diese hier als Ausnehmung 16 ausgebildete Rastnute 18' am Tragrahmen 10 erlaubt also im Zusammenspiel mit der Rastnase 28' die Fixierung der Portionsschale 24 in seiner Lagerung im Tragrahmen 10 und zudem seine Fixierung beim Öffnen bzw. Abziehen des Deckelelements 30.

Wie in Fig. 1 dargestellt ist der Tragrahmen 10 so ausgeführt, dass die eingehängte Portionsschale 24, am Oberrand 13 des Tragrahmens 10 befestigt, frei in den freien Bereich 11 des Tragrahmens 10, ggf. mit leichter Auflage des bodenseitigen Scheitelbereichs auf einer Bodenfläche hineinhängt.

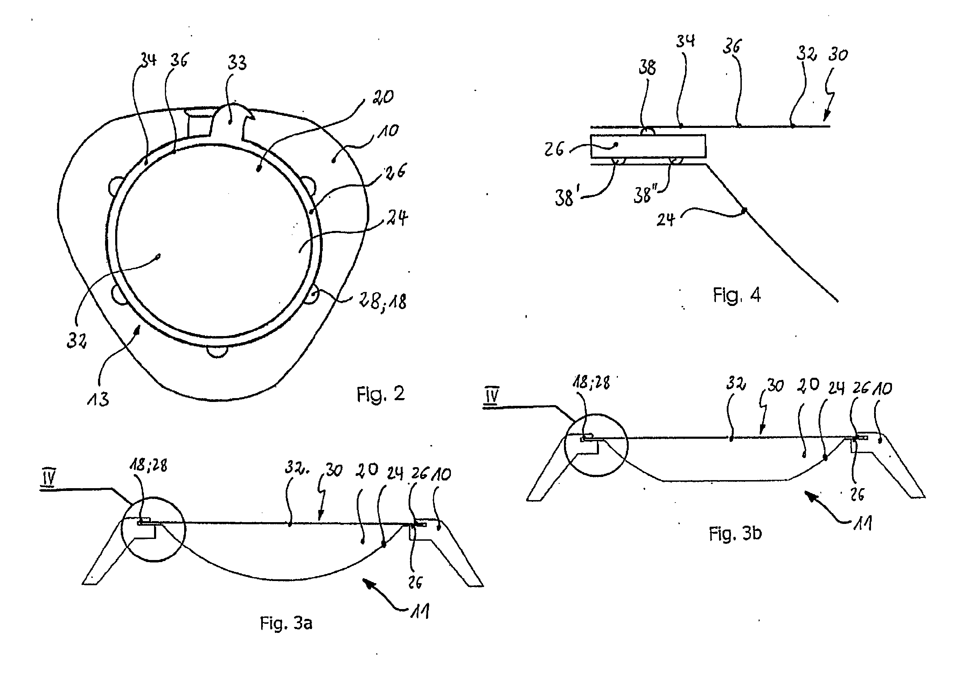

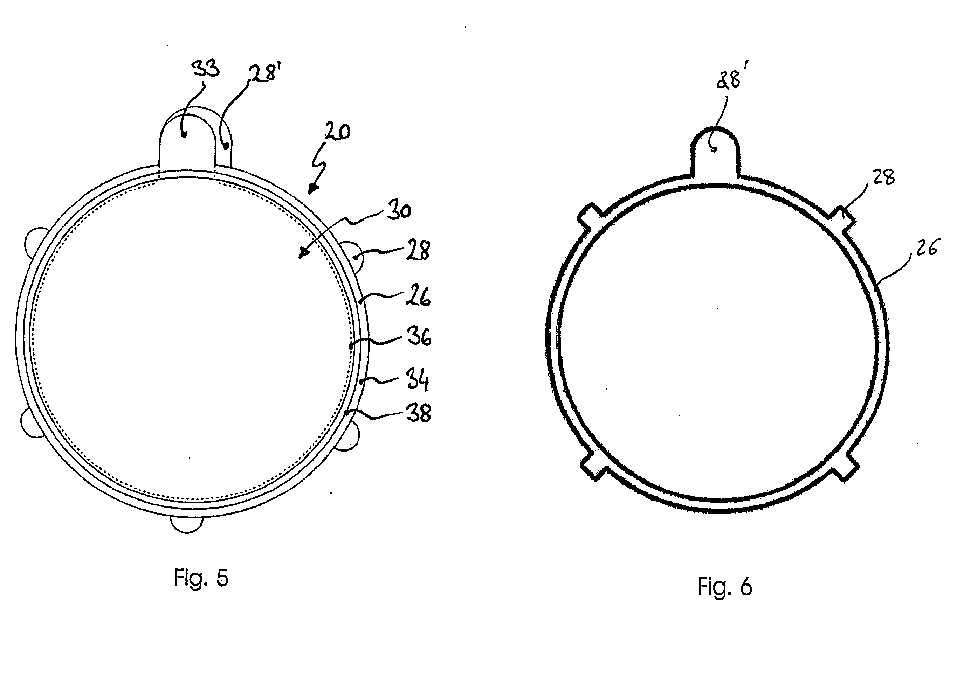

Die Ausführungsform aus Fig. 1 ist in den Fig. 2 und 3 nun in einer Draufsicht und als Querschnitt dargestellt. In Fig. 2 erkennt man wieder den Tragrahmen 10 und die darin eingehängte Portionsschale 24. Die Portionsschale 24 greift dabei, wie bereits erwähnt, mit ihren am Halterahmen 26 ausgebildeten Rastnasen 28 in die komplementär am Oberrand 13 ausgebildeten Rastnuten 18 ein. Durch ein Verdrehen der Portionsschale 24 bzw. des gesamten Portionskörpers 20 (siehe Fig. 5 u 6), hier um eine Achse senkrecht zur Darstellungsebene, kann durch die entsprechend ausgeführten Arretierungsnuten 18 bzw. Arretierungsnasen 28 die Portionsschale 24 gegen ein Abheben gesichert werden, so dass ein Abziehen des Deckelelement 30 über die Öffnungslasche 33 möglich ist.

Insbesondere in Fig. 3a ist die Lagerung der hier in Gestalt eines Kugelabschnitts ausgebildeten Portionsschale 24 bzw. des Portionskörpers 20 im Tragrahmen 10 bzw. dessen Arretierung durch das Verbindungselement 18; 28 genau erkennbar, wobei insbesondere der freie Bereich 11 des Tragrahmens 10 sichtbar wird.

In Fig. 3b ist eine gegenüber der in Fig. 3a gezeigten Ausführungsform abgewandelte Ausgestaltung dargestellt, bei der die Portionsschale 24 nicht in Gestalt eines Kugelabschnitts, sondern in Form eines Kugelsegments ausgestaltet ist, also eine der Aufstell-oder Bodenfläche zugewandte Abflachung aufweist.

In Fig. 4 ist schematisch der in Fig. 3 dargestellte Randbereich des erfindungsgemäßen Futternapfes bzw. Nahrungscontainers dargestellt. Erkennbar ist ein Teil der Portionsschale 24, die über entsprechende im Wesentlichen feste Schweißverbindungen 38',38" mit dem Halterahmen 26 verbunden ist. Die Schweißverbindungen 38', 38" sind in Form zweier oder mehrerer konzentrisch umlaufender Ringe zwischen Halteelement 26 und Portionsschale 24 ausgebildet. Diese "mehrfache" Versiegelung hat den Vorteil, dass eine recht unwahrscheinliche Fehlsiegelung durch weitere Siegelung aufgefangen wird. Auf der Oberseite des Halterahmens 26 ist über eine peelbare Schweißverbindung bzw. Peelnaht 39 das Deckelelement 30 befestigt.

Über die Peelnaht 39 wird eine Siegelung zwischen Deckelelement 30 und Halteelement 26 bewirkt, die bei Aufwendung einer vorbestimmten Zugkraft lösbar ist. Dies ist möglich durch eine Geometrie der Siegelnaht, die in Richtung auf die Öffnungslasche spitz zuläuft. Der Vorteil besteht darin, dass der Portionskörper 20 dann komplett ohne jegliche störende Restabschnitte des Deckelelements 30 zur Entnahme von Nahrung freiliegt. Allerdings muss die Peelnaht 39 (oder mehrere Peelnähte für bessere Barrieren) so angelegt sein, dass eine ausreichende Barriere zur Aufrechterhaltung der Lagerfähigkeit der Tiernahrung sowie die Verhinderung eines versehentlichen Abreißen gewährleistet sind.

In Fig. 5 wird gleichzeitig die Ausbildung der Portionsschale bzw. des Portionskörpers 20 von oben dargestellt, daher auch eine abweichende Ausführungsform veranschaulicht. Hier ist anstelle der Peelnaht 39 eine feste Schweißverbindung 40 auch zwischen Deckelelement 30 und dem Halterahmen 26 vorgesehen. Eine derart feste Schweißverbindung, die auch (vgl. die Schweißverbindung 38', 38" zwischen Halteelement 26 und Portionsschale 24 in Fig. 4) in zwei oder mehreren Linien ausgebildet sein kann, lässt sich hinsichtlich einer ausreichenden Barriere im Hinblick auf die Haltbarkeit des Nahrungsproduktes möglicherweise besser beherrschen. Das Deckelelement 30 wird dann dadurch geöffnet, dass zwischen einem Deckelring 34 und dem Deckel 32 selbst eine Sollbruchstelle 36 angelegt ist, die sich beispielsweise durch Laserperforation in definierter Weise herstellen lässt. In diesem Fall verbleibt beim Abreißen des Deckels 32 der Deckelring 34 am Halterahmen 26 haften, so dass darauf zu achten ist, dass der verbleibende Deckelring 34 bei Entnahme von Nahrung durch ein Tier aus der Portionsschale 24 kein übermäßiges Hindernis darstellt.

Die Sollbruchstelle 36 läuft hier von jeder Seite der Öffnungslasche 33 um den Deckel 32 herum, so dass ein Abziehen des Deckels 32 an der Öffnungslasche 33 zu einem gleichmäßigen Abreißen des Deckels 32, ausgehend von der Öffnungslasche 33 führt.

In Fig. 6 ist der in Fig. 5 dargestellte Halterahmen 26 mit einer unterschiedlichen Ausgestaltung, Anzahl und Positionierung der Rastnasen 28 dargestellt.

Anders als in der Ausgestaltung nach Fig. 5, bei der fünf Rastnasen 28 vorgesehen sind, sind in der Ausführungsform nach Fig. 6 lediglich vier Rastnasen 28 vorgesehen. Die Rastnasen 28 in der Ausführungsform nach Fig. 6 sind rechteckförmig ausgestaltet, wohingegen die Rastnasen nach der Ausführungsform in Fig. 5 eine im Wesentlichen halbkreisförmige Kontur aufweisen.

Die Figs. 7 und 8 veranschaulichen die Arretierung des Halteelements 26 im Tragrahmen 10.

Dabei zeigt Fig. 7 den Portionskörper 20 im unverriegelten und Fig. 8 im verriegelten Zustand. Im unverriegelten Zustand sind die Rastnasen 28 im Wesentlichen deckungsgleich mit den Rastnuten 18. Durch eine Drehung des Portionskörpers 20, hier in Pfeilrichtung A, greifen die Rastnasen 28 in ihren Arretierungssitz an den Rastnuten 18, so dass ein Abheben des Portionskörpers 20 in zur Zeichnungsebene vertikaler Richtung verhindert wird. Bei dieser Ausführungsform genügen aufgrund der ausreichenden Stabilität des Halterahmens 26 die in der Nachbarschaft der Öffnungslasche 33 angeordneten Rastnasen 18' bzw. 18" und die komplementär ausgeformten Nuten 28' und 28" einer Fixierung, um ein Abheben insbesondere Abbiegen des Portionskörpers 20 aus seiner Lagerung zu verhindern.

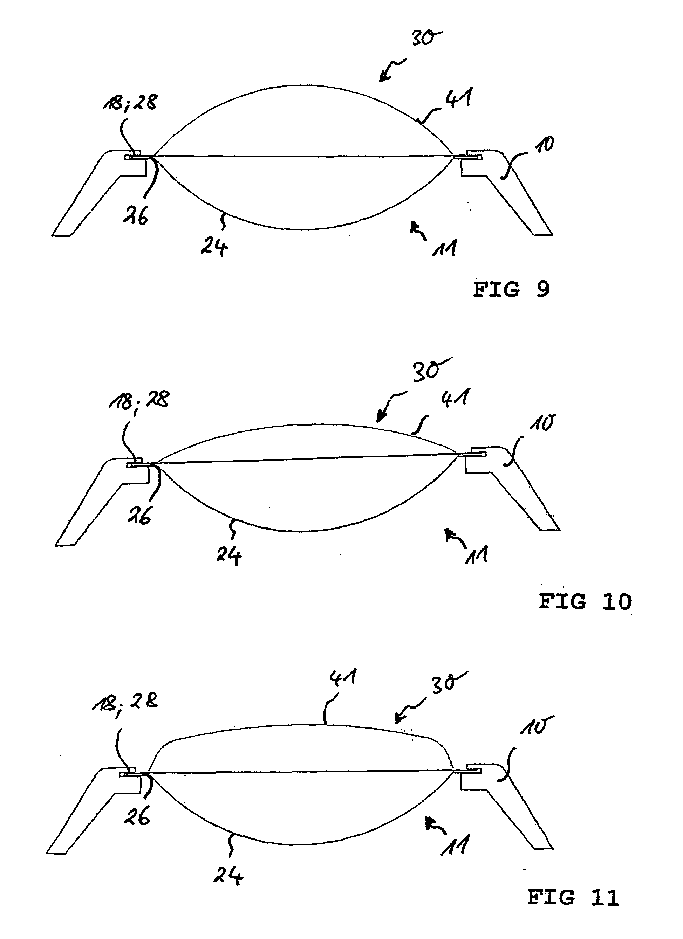

In den Fig. 9 bis 11 sind mehrere Varianten einer modifizierten Ausführungsform dargestellt, bei der das Deckelelement 30 zur Ausbildung einer Deckelhaube 41 eine dreidimensional verformte Folie umfasst oder aus dieser besteht. Die dreidimensionale Verformung kann ähnlich erreicht werden, wie die Verformung der Kunststofffolie zur Ausbildung der unten liegenden Portionsschale 24. Es können für Portionsschale 24 und Deckelhaube 41 unterschiedliche Kunststofffolien zur Anwendung kommen. Es können aber auch dieselben Kunststofffolien eingesetzt werden. Als Materialien kommen insbesondere die genannten Materialien in Betracht, nämlich Polyethylenterephtalat (PET), Polyethylen (PE), orientiertes Polypropylen (OPP), Polyamid (PA) und/oder Cast Polypropylen (CPP), wobei die Folie aus diesen Materialien gebildet sein oder diese Materialien zumindest umfassen kann.

In Fig. 9 ist die Deckelhaube als Kugelsegment ausgestaltet, wobei insbesondere Kugelradius sowie Segmenthöhe der Formgebung der unten liegenden Portionsschale entsprechen können, also Kugelradius und Segmenthöhe jeweils im Wesentlichen gleich sind.

In Fig. 10 ist eine alternative Formgestaltung dargestellt, wobei hier die Deckelhaube 41 als Kugelsegment geringerer Kugelsegmenthöhe mit einer zusätzlichen Abflachung im oberen Bereich ausgebildet ist.

In Fig. 11 ist eine nochmals alternative Ausführungsform dargestellt, wobei hier die Deckelhaube ein relativ großes Volumen bei dennoch geringer Bauhöhe dadurch ausbildet, dass die Deckelhaube im Wesentlichen eine zylindrische Grundform, allerdings mit gerundeter Mantelfläche sowie gerundeter Deckelfläche umfasst.

### Bezugszeichenliste

- 10: Tragrahmen
- 11: freier Bereich
- 13: Oberrand
- 14: Beine
- 16: Ausnehmungen
- 18: Verbindungselement bzw. Rastnute
- 20: Portionskörper
- 22: Innenraum
- 24: Portionsschale
- 26: Halterahmen
- 28: Verbindungselement bzw. Rastnase
- 30: Deckelelement
- 32: Deckel
- 33: Öffnungslasche
- 34: Deckelring
- 36: Sollbruchstelle
- 38: Schweißverbindung
- 39: Peelnaht
- 40: Schweißverbindung
- 41: Deckelhaube
- A: Pfeilrichtung bzw. Drehrichtung

## Patentansprüche

1. Futternapf, insbesondere für Tiere, mit einer dünnwandigen Portionsschale (24) und einem diese tragenden, wieder verwendbaren Tragrahmen (10) mit einem bodenfreien Bereich (11), wobei die Portionsschale (24) über einen Oberrand (23) in dem freien Bereich des Tragrahmens (10) lösbar frei einhängbar ist,
**dadurch gekennzeichnet, dass**
die Portionsschale (24) aus einer dreidimensional verformten Kunststofffolie, insbesondere aus Polyethylenterephtalat (PET), Polyethylen (PE), orientiertem Polypropylen (OPP), Polyamid (PA) und/oder Cast Polypropylen (CPP) gebildet ist oder diese Materialien umfasst.

2. Futternapf nach Anspruch 1,
**dadurch gekennzeichnet, dass**
der Kunststofffolie der Portionsschale (24) zumindest annährend die Form eines Kugelabschnittes oder Kugelsegments, insbesondere durch Verformen, aufgeprägt ist.

3. Futternapf nach einem der vorhergehenden Ansprüche,
**dadurch gekennzeichnet, dass**
die Portionsschale (24) mit der zu einem Kugelabschnitt bzw. Kugelsegment geformten Kunststofffolie formstabil ist.

4. Futternapf nach einem der vorhergehenden Ansprüche,
**dadurch gekennzeichnet, dass**
die Folie eine Verbundfolie mit einem mehrschichtigen Aufbau ist, und insbesondere eine Barriereschicht, insbesondere aus Aluminium (AL), Siliziumoxyd (SiOx) und/oder Ethylvinylalkohol (EVOH) aufweist.

5. Futternapf nach einem der vorhergehenden Ansprüche,
**dadurch gekennzeichnet, dass**
die Folie wenigstens eine Drei-Schichtanordnung aufweist, insbesondere eine OPP-Schicht/Barriere-Schicht/PE-Schicht, OPP-Schicht/Barriere-Schicht/CPP-Schicht oder PET-Schicht/Barriere- Schicht/CPP-Schicht-Anordnung.

6. Futternapf nach einem der vorhergehenden Ansprüche,
**dadurch gekennzeichnet, dass**
die Dicke der Folie (24) zwischen 70 µm und 150 µm beträgt.

7. Futternapf nach einem der vorhergehenden Ansprüche,
**dadurch gekennzeichnet, dass**
die Portionsschale (24) am Oberrand (23) einen stabilisierenden, im wesentlichen formstabilen Halterahmen (26) aufweist, über den sie am Tragrahmen (10) insbesondere lösbar einhängbar ist.

8. Futternapf nach Anspruch 7,
**gekennzeichnet durch**
wenigstens ein Verbindungselement (18, 28) am Halterahmen (26) und/oder am Tragrahmen (10) zum insbesondere lösbaren Befestigen der Portionsschale (24) am Tragrahmen (10).

9. Futternapf nach Anspruch 8,
**dadurch gekennzeichnet, dass**
das Verbindungselement (18, 28) eine Rastnase (28) am Halterahmen (26) und eine komplementäre Rastnute (18) am Tragrahmen (10) umfasst oder umgekehrt.

10. Futternapf nach einem der vorhergehenden Ansprüche,
**dadurch gekennzeichnet, dass**
die Portionsschale (24) ein öffenbares und/oder ggf. wieder verschließbares Deckelelement (30) aufweist.

11. Futternapf nach Anspruch 10,
**dadurch gekennzeichnet, dass**
das Deckelelement (30) am Halterahmen (26) der Portionsschale (24) angeordnet ist.

12. Futternapf nach einem der vorhergehenden Ansprüche 10 oder 11,
**dadurch gekennzeichnet, dass**
das Deckelelement (30) am Halterahmen (26) über eine Peelnaht (39) lösbar befestigt ist.

13. Futternapf nach einem der vorhergehenden Ansprüche 10 bis 12,
**dadurch gekennzeichnet, dass**
das Deckelement (30) einen Deckel (32) und einen Deckelring (34) aufweist, wobei der Deckel (32) über eine Sollbruchstelle (36), insbesondere eine Laserperforation, lösbar mit dem Deckelring (34) und der Deckelring (34) fest mit dem Halterahmen (26) verbunden ist.

14. Futternapf nach einem der vorhergehenden Ansprüche 10 bis 13,
**dadurch gekennzeichnet, dass**
das Deckelelement (30) eine Öffnungslasche (33) zum Abziehen des Deckels (32) bzw. des Deckelelernentes (30) von der Portionsschale (24) aufweist, wobei diese Öffnungslasche (33) im Wesentlichen deckungsgleich mit wenigstens einem Verbindungselement (28') am Tragrahmen ausgebildet ist.

15. Futternapf nach einem der vorhergehenden Ansprüche,
**gekennzeichnet durch,**
wenigstens ein Formstabilisierungselement am Tragrahmen (10) und/oder an der Portionsschale (24), das, nach dem Einhängen der Portionsschale (24) in den Tragrahmen (10), mit beiden (10, 24) insbesondere die Form der Portionsschale (24) stabilisierend in Wirkverbindung steht.

16. Portionskörper (20) umfassend eine Portionsschale (24) zur Aufnahme von insbesondere Tiernahrung, mit einem insbesondere hermetisch angeschlossenem Innenraum (22), der eine vorkonfektionierte Menge an Nahrung enthält, zur Verwendung mit einem Futternapf gemäß einem der vorhergehenden Ansprüche.

## Claims

1. A feeding bowl, in particular for animals, comprising a thin-walled portion bowl (24) and a reusable support frame (10) carrying same and having a freestanding area (11), wherein the portion bowl (24) can be freely and detachably suspended in the free area of the support frame (10) via an upper edge (23),
**characterized in that**
the portion bowl (24) is made of a three-dimensionally deformed plastic foil, in particular from polyethylene terephthalate (PET), polyethylene (PE), oriented polypropylene (OPP), polyamide (PA) and/or cast polypropylene (CPP), or comprises said materials.

2. The feeding bowl according to claim 1,
**characterized in that**
at least approximately the shape of a ball section or spherical segment is imparted to the plastic foil of the portion bowl (24), in particular by deformation.

3. The feeding bowl according to any one of the preceding claims,
**characterized in that**
the portion bowl (24) having the plastic foil shaped into a ball section or spherical segment is dimensionally stable.

4. The feeding bowl according to any one of the preceding claims,
**characterized in that**
the foil is a composite foil having a multilayer structure and in particular comprises a barrier layer, in particular from aluminum (AL), silica (SiOx) and/or ethylvinyl alcohol (EVOH).

5. The feeding bowl according to any one of the preceding claims,
**characterized in that**
the foil comprises at least a three-layer arrangement, in particular an OPP layer/barrier layer/PE layer, OPP layer/barrier layer/CPP layer or PET layer/barrier layer/CPP layer arrangement.

6. The feeding bowl according to any one of the preceding claims,
**characterized in that**
the thickness of the foil (24) is between 70 µm and 150 µm.

7. The feeding bowl according to any one of the preceding claims,
**characterized in that**
the portion bowl (24) has a stabilizing, essentially dimensionally stable holding frame (26) on the upper edge (23) via which it can be suspended, in particular detachably, on the support frame (10).

8. The feeding bowl according claim 7,
**characterized by**
at least one connecting element (18, 28) on the holding frame (26) and/or the support frame (10) for in particular detachably mounting the portion bowl (24) to the support frame (10).

9. The feeding bowl according to claim 8,
**characterized in that**
the connecting element (18, 28) comprises a detent lug (28) on the holding frame (26) and a complementary detent groove (18) on the support frame (10) or vice versa.

10. The feeding bowl according to any one of the preceding claims,
**characterized in that**
the portion bowl (24) comprises a cover element (30) which can be opened and/or closed, as need be.

11. The feeding bowl according to claim 10,
**characterized in that**
the cover element (30) is arranged on the holding frame (26) of the portion bowl (24).

12. The feeding bowl according to any one of claims 10 or 11,
**characterized in that**
the cover element (30) is detachably mounted to the holding frame (26) via a peel seam (39).

13. The feeding bowl according to any one of claims 10 to 12,
**characterized in that**
the cover element (30) comprises a cover (32) and a cover ring (34), wherein the cover (32) is detachably connected to the cover ring (34) via a predetermined breaking point (36), in particular a laser perforation, and the cover ring (34) is firmly connected to the holding frame (26).

14. The feeding bowl according to any one of claims 10 to 13,
**characterized in that**
the cover element (30) comprises an opening tab (33) for pulling the cover (32) or cover element (30) from the portion bowl (24), wherein said opening tab (33) is configured to be essentially congruent with at least one connecting element (28') on the support frame.

15. The feeding bowl according to any one of the preceding claims,
**characterized by**
at least one shape stabilizing element on the support frame (10) and/or portion bowl (24) which, after suspending the portion bowl (24) in the supporting frame (10) is in operative connection with both of them (10, 24), in particular stabilizing the shape of the portion bowl (24).

16. A portion body (20) including a portion bowl (24) for receiving in particular pet food, having an in particular hermetically sealed interior space (22) containing a prefabricated amount of food, for use with a feeding bowl according to any one of the preceding claims.

## Revendications

1. Ecuelle, en particulier pour animaux, comportant un bol de portion (24) à paroi mince et un cadre porteur (10) portant celui-ci, réutilisable et pourvu d'une zone sans fond (11), le bol de portion (24) pouvant être accroché librement de manière amovible dans la zone sans fond du cadre porteur (10) via un bord supérieur (23),
**caractérisée en ce que**
le bol de portion (24) est constitué d'une feuille en matière synthétique déformée en trois dimensions, en particulier en polyéthylène téréphtalate (PET), polyéthylène (PE), polypropylène orienté (OPP), polyamide (PA) et/ou polypropylène injecté (CPP) ou comporte ces matières.

2. Ecuelle selon la revendication 1,
**caractérisée en ce que**
au moins approximativement la forme d'une section sphérique ou d'un segment sphérique est imprimée, en particulier par déformation, à la feuille en matière synthétique du bol de portion (24).

3. Ecuelle selon l'une des revendications précédentes,
**caractérisée en ce que**
le bol de portion (24) avec la feuille synthétique formée en une section sphérique ou segment sphérique est indéformable.

4. Ecuelle selon l'une des revendications précédentes,
**caractérisée en ce que**
la feuille est une feuille composite dotée d'une structure multicouche, et présente en particulier une couche barrière, en particulier en aluminium (AL), oxyde de silicium (SiOx) et/ou alcool éthylvinylique (EVOH).

5. Ecuelle selon l'une des revendications précédentes,
**caractérisée en ce que**
la feuille présente au moins un agencement de trois couches, en particulier un agencement de couche d'OPP / couche barrière / couche de PE, couche d'OPP / couche barrière / couche de CPP ou couche de PET / couche barrière / couche de CPP.

6. Ecuelle selon l'une des revendications précédentes,
**caractérisée en ce que**
l'épaisseur de la feuille (24) est comprise entre 70 µm et 150 µm.

7. Ecuelle selon l'une des revendications précédentes,
**caractérisée en ce que**
le bol de portion (24) présente sur le bord supérieur (23) un cadre de maintien (26) stabilisant et sensiblement indéformable moyennant lequel il peut être accroché au cadre porteur (10) en particulier de façon amovible.

8. Ecuelle selon la revendication 7,
**caractérisée par**
au moins un élément de liaison (18, 28) sur le cadre de maintien (26) et/ou sur le cadre porteur (10) pour la fixation en particulier amovible du bol de portion (24) sur le cadre porteur (10).

9. Ecuelle selon la revendication 8,
**caractérisée en ce que**
l'élément de liaison (18, 28) comporte un ergot d'encliquetage (28) sur le cadre de maintien (26) et une rainure d'encliquetage (18) complémentaire sur le cadre porteur (10) ou inversement.

10. Ecuelle selon l'une des revendications précédentes,
**caractérisée en ce que**
le bol de portion (24) présente un élément de couvercle (30) ouvrable et/ou éventuellement refermable.

11. Ecuelle selon la revendication 10,
**caractérisée en ce que**
l'élément de couvercle (30) est disposé sur le cadre de maintien (26) du bol de portion (24).

12. Ecuelle selon l'une des précédentes revendications 10 ou 11,
**caractérisée en ce que**
l'élément de couvercle (30) est fixé de manière amovible sur le cadre de maintien (26) via un joint pelable (39).

13. Ecuelle selon l'une des précédentes revendications 10 à 12,
**caractérisée en ce que**
l'élément de couvercle (30) présente un couvercle (32) et un anneau de couvercle (34), le couvercle (32) étant relié de manière amovible à l'anneau de couvercle (34) via un point de rupture théorique (36), en particulier une perforation laser, et l'anneau de couvercle (34) étant relié de manière fixe au cadre de maintien (26).

14. Ecuelle selon l'une des précédentes revendications 10 à 13,
**caractérisée en ce que**
l'élément de couvercle (30) présente une languette d'ouverture (23) permettant de retirer le couvercle (32) ou l'élément de couvercle (30) du bol de portion (24), cette languette d'ouverture (23) étant constituée de manière sensiblement congruente à au moins un élément de liaison (28') sur le cadre porteur.

15. Ecuelle selon l'une des revendications précédentes,
**caractérisée par**
au moins un élément de stabilisation de forme sur le cadre porteur (10) et/ou sur le bol de portion (24), qui, après l'accrochage du bol de portion (24) au cadre porteur (10), est en liaison active avec ces deux derniers (10, 24), stabilisant en particulier la forme du bol de portion (24).

16. Corps de portion (20) comportant un bol de portion (24) destiné à recevoir en particulier de la nourriture animalière, présentant un espace intérieur (22) qui est fermé en particulier de manière hermétique et qui contient une quantité préconfectionnée de nourriture, et destiné à être utilisé avec une écuelle selon l'une des revendications précédentes.
